# EUROPÄISCHE PATENTSCHRIFT

(11) **EP 4 132 875 B1**
(45) Veröffentlichungstag und Bekanntmachung des Hinweises auf die Patenterteilung: **26.08.2026**
(21) Anmeldenummer: 21719065.1
(22) Anmeldetag: 07.04.2021
(51) Int. Cl.: B66C 1/66

(54) **ANSCHLAGVORRICHTUNG MIT STELLMECHANISMUS, DER EINEN SEPARATEN NOCKENTRÄGER AUFWEIST**
LASHING DEVICE WITH ADJUSTMENT MECHANISM WHICH HAS A SEPARATE CAM CARRIER
DISPOSITIF D'ATTACHE ÉQUIPÉ D'UN MÉCANISME DE RÉGLAGE COMPRENANT UN PORTE-CAME DISTINCT

(30) Priorität: 07.04.2020 DE 102020204490
(43) Veröffentlichungstag der Anmeldung: 15.02.2023
(73) Patentinhaber: RUD Ketten Rieger & Dietz GmbH u. Co. KG, 73432 Aalen (DE)
(72) Erfinder: BETZLER, Michael, 73453 Abtsgmünd (DE); HAAS, Simon, 73571 Göggingen-Horn (DE)
(74) Vertreter: Grünecker Patent- und Rechtsanwälte PartG mbB
(86) Internationale Anmeldenummer: PCT/EP2021/059104
(87) Internationale Veröffentlichungsnummer: WO 2021/204899

(56) Entgegenhaltungen:
- WO-A1-2015/004124
- DE-A1- 102016 103 050
- DE-A1- 102018 213 825
- DE-A1- 102018 213 827
- DE-C1- 3 822 690

## Beschreibung

Die Erfindung betrifft eine Anschlagvorrichtung mit einem Sockelteil, der an einem Gegenstand wie einer Last oder einer Ladefläche anbringbar ausgestaltet ist, mit einem relativ zum Sockelteil um eine Schwenkachse schwenkbar am Sockelteil angebrachten Bügelteil zum Anschlagen eines Anschlag-, Zurr-, Spann- oder Hebemittels und mit einem Stellmechanismus, der wenigstens eine Bügelabweisnocke und wenigstens einen mit der Schwenkbewegung zwischen Bügelteil und Sockelteil die Bügelabweisnocke an einer Abweisposition zumindest abschnittsweise überstreichenden Bremstaster aufweist und der eine mit abnehmendem Abstand von der wenigstens einen Abweisposition zunehmende, der Schwenkbewegung entgegengerichtete Abweiskraft erzeugt.

Derartige Anschlagvorrichtungen sind beispielsweise aus der DE 10 2018 213 825 A und der DE 10 2018 213 827 A bekannt. Mithilfe des Stellmechanismus kann verhindert werden, dass der Bügelteil bestimmte Schwenkstellungen relativ zum Sockelteil einnimmt. So kann verhindert werden, dass der Bügelteil unter Einfluss seines Gewichts auf den Gegenstand fällt und diesen beschädigt. Der Stellmechanismus kann auch dazu verwendet werden, ein plötzliches Umschlagen des Bügelteils unter Last zu verhindern, wenn der Bügelteil ungünstig steht und sich zur Last ausrichtet.

Die vorliegende Erfindung setzt sich zum Ziel, die eingangs genannten Anschlagvorrichtungen dahingehend zu verbessern, dass sie kostengünstiger zu fertigen sind und gleichzeitig eine größere Variantenvielfalt ermöglichen.

Gelöst wird diese Aufgabe durch eine Anschlagvorrichtung gemäß Anspruch 1.

Aufgrund des als separates Bauteil ausgestalteten Nockenträgers können bei der Herstellung der Anschlagvorrichtung auf einfache Weise Bügelabweisnocken an unterschiedlichen Positionen und/oder in unterschiedlichen Ausgestaltungen angebracht werden. Es muss lediglich ein anderer Nockenträger verwendet oder der Nockenträger versetzt werden. Eine bauliche Veränderung des Sockelteils ist nicht mehr notwendig. Dadurch lässt sich die Anschlagvorrichtung einfach an unterschiedliche Einsatzzwecke anpassen, in denen unterschiedliche Abweispositionen gefordert sind.

Die Lösung kann durch die folgenden, jeweils für sich vorteilhaften und beliebig miteinander kombinierbaren Weiterbildungen nochmals verbessert werden.

So kann in einer ersten vorteilhaften Ausgestaltung der Nockenträger wiederholt lösbar und/oder austauschbar am Sockelteil oder Bügelteil angebracht sein. Die wiederholte Lösbarkeit und/oder Austauschbarkeit ermöglicht es, den Nockenträger zu Wartungszwecken zu demontieren oder, bei unterschiedlichen Einsätzen, gegen andere Nockenträger auszutauschen. Eine wiederholte Lösbar- und Austauschbarkeit lässt sich beispielsweise über eine Schraubverbindung, aber auch durch eine Schweiß- oder Lötverbindung erreichen, die ohne Beschädigung des Sockelteils oder Bügelteils getrennt werden kann.

Die Anschlagvorrichtung kann insbesondere eine Mehrzahl von gegeneinander austauschbaren Nockenträgern mit unterschiedlich geformten und/oder unterschiedlich positionierten Nocken aufweisen. Dies ermöglicht es einem Nutzer, die Anschlagvorrichtung an die eigenen Bedürfnisse anzupassen.

Der Nockenträger kann gemäß einer weiteren Ausgestaltung in unterschiedlichen Positionen am Sockelteil oder Bügelteil befestigbar sein. In den unterschiedlichen Positionen kann sich die wenigstens eine Bügelabweisnocke an einer unterschiedlichen Abweisposition befinden.

Ein Nockenträger kann eine Mehrzahl von Abweispositionen aufweisen. Jeder Abweisposition kann insbesondere eine Bügelabweisnocke zugeordnet sein, so dass der Nockenträger eine Mehrzahl von Abweisnocken aufweisen kann. An einer Bügelabweisnocke ist der Bremstaster elastisch ausgelenkt.

Gemäß einer besonders vorteilhaften Ausgestaltung ist der Nockenträger am Sockelteil befestigt. Gemäß der Erfindung befindet sich der Nockenträger an der in Richtung der Schwenkachse vom Sockelteil weg weisenden Seite des Bügelteils. Eine solche Ausgestaltung ist insbesondere bei großen Anschlagvorrichtungen vorteilhaft, da bei großen Baugrößen zwischen Sockelteil und Bügelteil aufgrund des in einem solchen Fall verhältnismäßig großen Sockelteils kein ausreichender Platz vorhanden ist.

Gemäß einer weiteren vorteilhaften Ausgestaltung kann sich der Nockenträger wenigstens segmentförmig, insbesondere aber geschlossen um die Schwenkachse herum erstrecken. Diese Ausgestaltung vereinfacht den Aufbau des Stellmechanismus, da der Nockenträger in dieser Ausgestaltung sich entlang der Schwenkbewegung erstreckt.

Der Nockenträger kann gemäß einer weiteren vorteilhaften Ausgestaltung ring-, insbesondere hülsen- oder scheibenförmig sein. Die Scheibe kann zur Sicherung des Bügelteils den Bügelteil zumindest abschnittsweise überdecken.

Die Bügelabweisnocke kann parallel zur Schwenkachse vom Nockenträger zum Sockelteil hin, wenn der Nockenträger am Bügelteil angebracht ist, oder zum Bügelteil hin, wenn der Nockenträger am Sockelteil angebracht ist, vorspringen. Die Abweisnocke kann dabei im Wesentlichen wellenförmig ausgestaltet sein, wobei der Scheitelpunkt der Nocke von zwei Auflaufschrägen begrenzt sein kann. Der Scheitelpunkt muss nicht punktförmig ausgestaltet sein, sondern kann auch ein Plateau ausbilden, das sich über einen Bereich der Schwenkbewegung erstreckt und entlang dem der Bremstaster gleichbleibend ausgelenkt ist.

Befindet sich eine Abweisposition und die dieser Abweisposition zugeordnete Nocke am Ende des Schwenkbereichs des Bügelteils, so kann die Abweisnocke auch nur eine einzige Auflaufschräge aufweisen.

Die Form der Bügelabweisnocke kann an den jeweiligen Zweck der Abweisposition angepasst sein. Dient die Abweisposition als Bremse, kann beispielsweise eine lange Auflaufschräge vorgesehen sein, die die Abweiskraft allmählich erhöht.

Der Nockenträger kann an einem den Bügelteil tragenden Achsstummel des Sockelteils befestigt sein. Insbesondere kann der Nockenträger an einer Stirnfläche des freien Endes des Achsstummels bevorzugt verdrehsicher angebracht sein. Die Stirnfläche weist dabei bevorzugt in Richtung der Schwenkachse. Auf diese Weise ist der Nockenträger von außen einfach zugänglich und zu demontieren.

Der Bremstaster und der Nockenträger sind wenigstens in einem Bereich um die wenigstens eine Abweisposition federnd gegeneinander gedrückt. Dabei ist wenigstens der Bremstaster elastisch verformt bzw. ausgelenkt. Die Abweiskraft wird bevorzugt durch den federnd erzeugten Druck hervorgerufen. Der Bremstaster weist hierzu bevorzugt eine Feder auf. Der Bremstaster kann insbesondere eine Blattfeder aufweisen oder als Blattfeder ausgestaltet sein. Der Bremstaster kann auch ein federndes Druckstück beispielsweise in Form einer federgespannten Kugel sein.

Der Nockenträger kann ein Lager, das den Bügelteil schwenkbar um den Sockelteil hält, insbesondere über einen Lagerspalt dieses Lagers, überdecken.

Der Sockelteil mit dem daran angebrachten Bügelteil kann um eine senkrecht zur Schwenkachse verlaufende Drehachse drehbar an einem Haltebolzen befestigt sein. Dies ermöglicht es, dass sich der Sockelteil selbständig zu der über das Anschlag-, Zurr-, Spann- oder Hebemittel auf dem Bügelteil eingeleiteten Kraft ausrichten kann.

Gemäß einer weiteren vorteilhaften Ausgestaltung kann sich wenigstens eine Abweisposition beabstandet von den Enden des Schwenkbereichs des Bügelteils gegenüber dem Sockelteil befinden. Beispielsweise kann sich wenigstens eine Abweisposition mittig zwischen den Enden des Schwenkbereichs befinden. Eine Abweisposition kann sich auch an der Stelle befinden, an der eine Bügelebene parallel zur Drehachse verläuft.

Eine Abweisposition inmitten des Schwenkbereichs führt bevorzugt zu einem Umschnappen des Bügelteils, wenn er die Abweisposition überstreicht. Nähert sich der Bügelteil der Abweisposition, so ist zunächst eine zunehmende Kraft aufzubringen, um die Abweiskraft zu überwinden, wenigstens den Bremstaster elastisch auszulenken und den Bügelteil weiter in Richtung der Abweisposition zu schwenken. Nach Überschreiten der Abweisposition schnappt der Bügelteil um und der Bügelteil wird durch den Stellmechanismus von der Abweisposition weggedrückt. Die bei Annäherung an die Abweisposition zunehmende Abweiskraft führt bei einer Schwenkbewegung weg von der Abweisstelle zu einer die Schwenkbewegung unterstützenden Kraft.

Ein Umschnappen wird durch eine in Schwenkrichtung kurze, steile Bügelabweisnocke verbessert, was zusätzlich auch zu einem exakt definierten Umschnappen führt.

Jeweils eine Abweisposition kann sich an einem Ende des Schwenkbereichs des Bügelteils befinden. An diesen Abweispositionen wirkt der Stellmechanismus als eine Bügelfallbremse, die den Bügelteil durch Auflaufen des Bremstasters auf die Abweisnocke vor Erreichen der Enden des Schwenkbereichs abbremst. Die Bügelabweisnocke kann sich bei einer solchen Ausgestaltung jeweils der beiden Enden durchgängig von einem zum anderen Ende der Schwenkbewegung erstrecken.

Im Folgenden ist die Erfindung anhand einer Ausführungsform beispielhaft unter Bezugnahme auf die beigefügten Zeichnungen näher erläutert. Dabei sind in den Zeichnungen für Elemente, die einander hinsichtlich Funktion und/oder Aufbau entsprechen, dieselben Bezugszeichen verwendet.

Nach Maßgabe der obigen Ausführungen kann bei der beschriebenen Ausführungsform auf ein Merkmal verzichtet werden, wenn es für eine bestimmte Anwendung auf den mit diesem Merkmal verbundenen technischen Effekt nicht ankommt. Umgekehrt kann ein bei der beschriebenen Ausführungsform nicht enthaltenes Merkmal hinzugefügt werden, sollte dessen technischer Effekt in einer bestimmten Anwendung benötigt werden.

Es zeigen:
- Fig. 1: eine schematische Perspektivdarstellung einer Anschlagvorrichtung;
- Fig. 2: eine schematische Schnittdarstellung der Anschlagvorrichtung der Fig. 1;
- Fig. 3: eine schematische Perspektivdarstellung eines Nockenträgers.

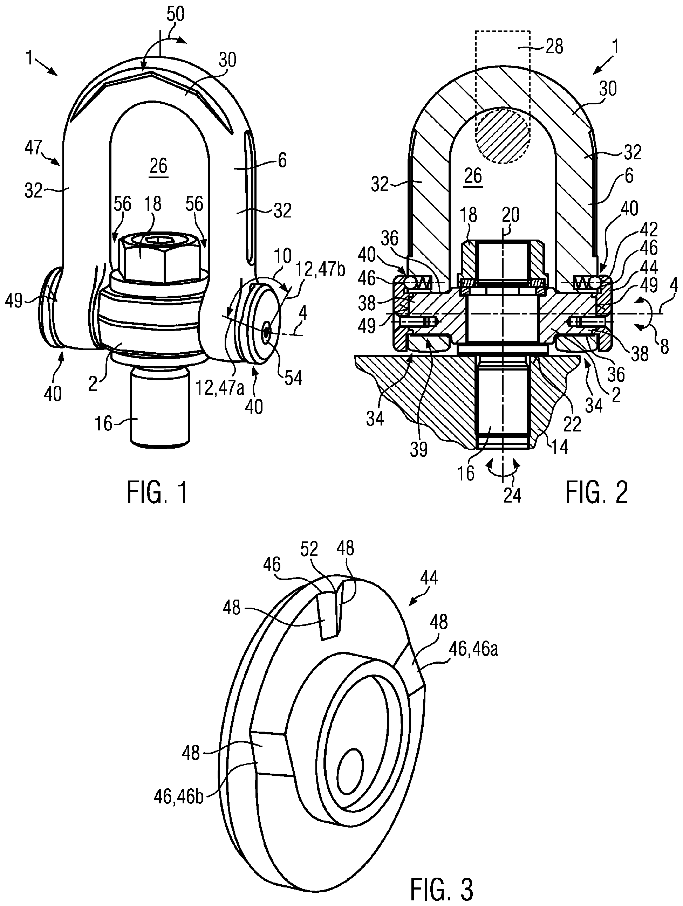

Zunächst wird der Aufbau einer möglichen Ausführungsform einer Anschlagvorrichtung 1 mit Bezug auf die Figuren 1 und 2 erläutert.

Die Anschlagvorrichtung 1 weist einen Sockelteil 2 und einen relativ zum Sockelteil 2 um eine Schwenkachse 4 schwenkbar am Sockelteil 2 angebrachten Bügelteil 6 auf. Die Schwenkbewegung des Bügelteils 6 ist schematisch durch einen Pfeil 8 in Fig. 2 dargestellt. Die Schwenkbewegung 8 kann auf einen Schwenkbereich 10 (Fig. 1) begrenzt sein, der sich zwischen den Enden 12 der Schwenkbewegung 8 erstreckt. Der Schwenkbereich bzw. Schwenkwinkel 10 kann weniger als 180° betragen.

Die Anschlagvorrichtung ist über den Sockelteil 2 an einem Gegenstand 14, beispielsweise einer Last oder einer Ladefläche, anbringbar. Zur Befestigung der Anschlagvorrichtung 1 kann ein Haltebolzen 16 vorgesehen sein, der in den Gegenstand 14 einschraubbar ist. Der Haltebolzen 16 kann einen Kopf aufweisen. Alternativ kann der Sockelteil 2 über eine auf den Haltebolzen 16 geschraubte Mutter 18 am Haltebolzen 16 und damit am Gegenstand 14 gesichert sein.

Der Sockelteil 2 ist bevorzugt um eine Drehachse 20 um den Haltebolzen 16 drehbar. Die Drehachse 20 verläuft dabei insbesondere senkrecht zur Schwenkachse 4. Die Drehachse 20 kann senkrecht zu einer Montageebene 22 verlaufen, auf der die Anschlagvorrichtung 1 im am Gegenstand 14 montierten Zustand aufsitzt. Die Montageebene 22 kann parallel zur Schwenkachse 4 verlaufen. Die Drehbewegung 24 ist unbeschränkt, der Sockelteil 2 mitsamt dem Bügelteil 6 kann also um die Drehachse 20 unbegrenzt um ein beliebiges Vielfaches von 360° rotieren.

Der Bügelteil 6 bildet eine Öffnung 26 und dient zum Anschlagen eines Anschlag-, Zurr-, Spann- oder Hebemittels 28, beispielsweise eines Gurtes, einer Kette, eines Karabiners oder eines Hakens. Der Bügelteil 6 weist einen gekrümmten Bug 30 auf, der in zwei zueinander parallele, gerade Schenkel 32 übergehen kann. Anstelle eines gekrümmten Buges kann auch ein gerader Bug vorhanden sein. Die beiden Schenkel 32 können beabstandet vom Bug 30, in einem Bereich zwischen dem Sockelteil 2 und dem Bug 30, durch ein hier nicht dargestelltes Verbindungsstück verbunden sein, wenn der Bügelteil 6 besonders hohen Belastungen unterliegt. In den zungenförmigen, verbreiterten Enden 34 der beiden Schenkel 32 befindet sich jeweils eine Öffnung 36, durch die ein entsprechender Achsstummel 38 des Sockelteils 2 ragt. Eine Öffnung 36 und ein Achsstummel 38 bilden jeweils ein Lager 39, hier ein Gleitlager für die Schwenkbewegung 8. Um zu vermeiden, dass der Bügelteil 6 eine oder mehrere vorbestimmte Relativpositionen im Schwenkbereich 10 der Schwenkbewegung 8 relativ zum Sockelteil 2 einnimmt, ist ein Stellmechanismus 40 vorgesehen.

Der Aufbau und die Funktion des Stellmechanismus 40 sind im Folgenden mit Bezug auf die Figuren 1 bis 3 näher erläutert.

Der Stellmechanismus 40 weist einen bevorzugt federgespannten Bremstaster 42 und einen am Sockelteil 2 oder am Bügelteil 6 angebrachten Nockenträger 44 auf, der mit zumindest einer Bügelabweisnocke 46 versehen ist. Der Bremstaster 42 überstreicht im Zuge der Schwenkbewegung 8 die Bügelabweisnocke 46 an wenigstens einer Abweisposition 47, deren Lage durch die Position der Bügelabweisnocke 46 bestimmt ist. Eine Abweisposition 47 kann der in Fig. 1 dargestellten Stellung des Bügelteils 6 parallel zu Drehachse 20 oder senkrecht zur Montageebene 22 entsprechen. Zwei weitere Abweispositionen 47a, 47b können sich jeweils an den Enden 12 des Schwenkbereichs 10 befinden.

Eine Bügelabweisnocke 46 ist von einem wenigstens in etwa wellenförmig ausgestalteten Vorsprung gebildet, der wenigstens eine Auflaufschräge 48 aufweist.

Der Bremstaster 42 und die wenigstens eine Bügelabweisnocke 46 sind wenigstens an einer Abweisposition 47, 47a, 47b bevorzugt federnd gegeneinander gedrückt. Hierbei ist wenigstens der Bremstaster 42 elastisch ausgelenkt. Dabei kann der Nockenträger 44 im Bereich einer Abweisposition 47, 47a, 47b bzw. einer Bügelabweisnocke 46 federnd gegen den Bremstaster und/oder der Bremstaster wenigstens im Bereich einer Abweisposition 47, 47a, 47b bzw. die Bügelabweisnocke 46 federnd gegen den Nockenträger 44 gedrückt sein. In der dargestellten Ausführungsform ist lediglich zu Beispielzwecken der Nockenträger 44 fest am Sockelteil 2, insbesondere einem Achsstummel 38 bzw. dessen Stirnfläche 49 befestigt, während der Bremstaster 42 federnd am Bügelteil 6 angebracht ist. Der Bremstaster 42 kann als federndes Druckstück, beispielsweise mit einer durch eine Feder gespannten Kugel oder selbst als Feder, beispielsweise als bügelförmige Blattfeder ausgestaltet sein. Selbstverständlich kann der Nockenträger 44 auch am Bügelteil 6 und der Bremstaster 42 am Sockelteil angeordnet sein. So kann der Nockenträger 44 in einer Variante an der vom Sockelteil 2 weg weisenden Außenseite des Bügelteils 6 angebracht sein.

Ist der Nockenträger 44 gegenüber dem Sockelteil 2 stationär festgelegt, beispielsweise an diesem befestigt, so springt die wenigstens eine Bügelabweisnocke 46 in Richtung des Bügelteils 6 vor. Ist umgekehrt der Nockenträger 44 gegenüber dem Bügelteil 6 stationär festgelegt, beispielsweise an diesem befestigt, so springt die wenigstens eine Bügelabweisnocke 46 in Richtung des Sockelteils 2 vor. Dabei kann die wenigstens eine Bügelabweisnocke 46 bezüglich der Schwenkachse 4 radial nach innen oder außen, oder, wie dargestellt axial vorspringen. Entsprechend wirkt bei einer solchen Ausgestaltung der Bremstaster 42 radial nach außen, oder innen, oder axial auf den Nockenträger 44 bzw. die Bügelabweisnocke 46.

In der dargestellten Ausführungsform befindet sich eine Abweisposition 47a, 47b an jeweils einem Ende 12 des Schwenkbereichs 10 der Schwenkbewegung 8 des Bügelteils 6 gegenüber dem Sockelteil 2. Diesen beiden Abweispositionen 47a, 47b ist jeweils eine Bügelabweisnocke 46a, 46b zugeordnet. Bewegt sich der Bügelteil 6 zu den Enden 12, so läuft der Bremstaster 42 auf die Auflaufschräge 46 der jeweiligen Bügelabweisnocke 46a, 46b auf. Dadurch wird eine gegen die Schwenkbewegung gerichtete Abweiskraft bzw. Bremskraft erzeugt. Eine Bewegung über die Enden 12 des Schwenkbereichs 10 hinaus kann blockiert oder nur unter einem sehr hohen Kraftaufwand möglich sein.

Durch eine Bügelabweisnocke 46, die sich mitten im Schwenkbereich 10 befindet, wird ein Umschnappen des Bügelteils 6 an der durch die Lage der Bügelabweisnocke 46 bestimmten Abweisposition 47 erzeugt. Im Zuge der Relativbewegung zwischen Bremstaster 42 und Bügelabweisnocke 46 bzw. deren Scheitelpunkt 52 wird der Bremstaster 42 zunächst, wie bei den Bügelabweisnocken 46a, 46b zunehmend federelastisch ausgelenkt, so dass eine der Schwenkbewegung entgegengerichtete, von der Bügelabweisnocke 46 weg gerichtete Abweiskraft 50 erzeugt wird. Wird der Scheitelpunkt 52 passiert, so findet ein Umschnappen statt, denn nunmehr wirkt die Kraft, die vom Bremstaster 42 und der in Schwenkrichtung weisenden Auflaufschräge 48 erzeugt wird, als eine die Schwenkbewegung unterstützende Kraft, während der Bremstaster 42 ausfedert. Dieser Vorgang ist unabhängig davon, in welcher Richtung sich Bremstaster und Bügelabweisnocke überstreichen. Um eine klar definierte Abweisposition zu schaffen, bei der ein Umschnappen über einen möglichst kurzen Weg entlang der Schwenkbewegung stattfindet, sind die Auflaufschrägen 48 und bevorzugt auch der Scheitelpunkt 52 kürzer als bei den Bügelabweisnocken 46a, 46b an den Enden 12 des Schwenkbereichs 10. Selbstverständlich kann auch hier über die Länge der Auflaufschrägen 48 und die Höhe und Länge des Scheitelpunktes 52 einer Bügelabweisnocke 46 das Brems- und Umschnappverhalten an den jeweiligen Anwendungsfall angepasst werden.

Der Nockenträger 44 kann in Form eines Kreis- oder Kreisringsegmentes oder in Form einer kreis- oder kreisringförmigen Scheibe ausgebildet sein. Dabei kann sich der Nockenträger wenigstens abschnittsweise um die Schwenkachse 4 herum erstrecken.

Der Nockenträger ist wiederholt lösbar bzw. wiederholt austauschbar am Sockelteil 2 oder am Bügelteil 6 bzw. durch ein Befestigungsmittel 54 wie eine Schraube befestigt. Dadurch können je nach Einsatzzweck Nockenträger mit unterschiedlich ausgestalteten und/oder positionierten Bügelabweisnocken 46 und/oder mit einer unterschiedlichen Anzahl von Bügelabweisnocken 46 an ein und demselben Sockelteil oder Bügelteil angebracht werden. So kann beispielsweise in einer Ausgestaltung auf Bügelabweisnocken 46a, 46b am Ende des Schwenkbereichs 10 und/oder auf eine Abweisposition 47 in der Mitte des Schwenkbereichs verzichtet werden. Die Bügelabweisnocke 46 im Schwenkbereich 10, die ein Umschnappen des Bügelteils 6 bewirkt, kann bei einem anderen Nockenträger 44 an einer anderen Stelle angeordnet sein, so dass sich die dieser Bügelabweisnocke 46 zugeordnete Abweisposition 47 verlagert. Es können auch mehrere Umschnappstellen an unterschiedlichen Abweispositionen entlang der Schwenkbewegung 8 angeordnet sein. Durch zwei benachbarte Bügelabweisnocken kann zudem eine Verrastung für den Bügelteil 6 erzeugt werden, so dass dieser zwischen zwei Abweispositionen bzw. Bügelabweisnocken 46 gehalten ist. Dies ist beispielsweise dann sinnvoll, wenn der Bügelteil in einer weggeschwenkten Ruheposition verrastet werden soll.

Der Nockenträger 44 ist an der Stirnfläche 49 des Achsstummels 38 befestigt. Er kann, wie dargestellt, eine konzentrisch zur Schwenkachse 4 angeordnete bevorzugt flache Scheibe ausbilden, die den Achsstummel 38 radial überragt und den Bügelteil bzw. das Ende 34 eines Schenkels 32 abdeckt. Damit deckt der Nockenträger 44 das von der Öffnung 36 und dem Achsstummel 38 gebildete Lager 39 ab und verhindert dessen Verschmutzung.

Der Nockenträger 44 ist am Achsstummel 38 wiederholt lösbar bzw. austauschbar gehalten. Dies kann beispielsweise durch ein Befestigungsmittel 54, beispielsweise eine Schraube, erfolgen. Der Nockenträger 44 kann auch in unterschiedlichen Winkelstellungen relativ zur Drehachse 4 am Sockelteil 2 oder am Bügelteil 6 befestigbar sein, um die Winkellage der Abweisposition an unterschiedliche Montagepositionen der Anschlagvorrichtung 1 anzupassen.

Natürlich kann der scheibenförmige Nockenträger 44 auch am Bügelteil 6, insbesondere den Enden 34 angebracht sein. In diesem Fall kann der Bremstaster 42 am Sockelteil 2, insbesondere dem Achsstummel 38 bzw. dessen Endfläche 49 angebracht sein.

Der Stellmechanismus 40 kann jeweils zwei Paare von Nockenträgern 44 und Bremstastern 42 aufweisen, die sich bezüglich des Sockelteils 2 bevorzugt entlang der Schwenkachse 4 gegenüberliegen.

Liegen sich Bremstaster 42 und Bügelabweisnocke 46, 46a, 46b radial gegenüber, so kann der Nockenträger 44 auch hülsenförmig ausgestaltet sein.

Der Nockenträger 44 kann auch in einem Spalt 56 zwischen Bügelteil 6 und Sockelteil 2 bzw. zwischen Bügelteil 6 und Haltebolzen 16 oder Mutter 18 angeordnet sein, sofern dort ausreichend Platz vorhanden ist. In einem solchen Fall kann es sinnvoll sein, dass der Nockenträger lediglich ein Segment eines Kreisringes ausbildet oder in mehrere Kreisringsegmente unterteilt ist, so dass er lös- bzw. austauschbar ist, wenn das Bügelteil 6 am Sockelteil 2 montiert ist. Jedes der Segmente erstreckt sich dabei bevorzugt um weniger als 180° um die Drehachse, um eine solche nachträgliche Montage zu ermöglichen.

Im Bereich zwischen zwei Bügelabweisnocken 46 muss der Bremstaster 42 nicht notwendigerweise am Nockenträger 44 anliegen, was den Verschleiß etwas verringert. Allerdings kann gerade bei großen und schweren Bügelteilen durch ein permanentes Anliegen des Bremstasters am Nockenträger 44 auch in den Bereichen zwischen zwei Bügelabweisnocken 46 eine Bremswirkung erzielt werden, was die Handhabung derartiger Bügelteile erleichtert, da ein Teil des Eigengewichts des Bügelteils durch die dadurch erzeugte Bremswirkung aufgefangen wird.

### Bezugszeichen

- 1: Anschlagvorrichtung
- 2: Sockelteil
- 4: Schwenkachse
- 6: Bügelteil
- 8: Schwenkbewegung
- 10: Schwenkwinkel bzw. Schwenkbereich
- 12: Ende der Schwenkbewegung
- 14: Gegenstand, wie Last oder Ladefläche
- 16: Haltebolzen
- 18: Mutter
- 20: Drehachse
- 22: Montageebene
- 24: Drehbewegung
- 26: Öffnung
- 28: Anschlag-, Zurr-, Spann- oder Hebemittel
- 30: Bug des Bügelteils
- 32: Schenkel des Bügelteils
- 34: Ende des Schenkels
- 36: Öffnung am Ende des Schenkels
- 38: Achsstummel
- 39: Lager
- 40: Stellmechanismus
- 42: Bremstaster
- 44: Nockenträger
- 46, 46a, 46b: Bügelabweisnocke
- 47, 47a, 47b: Abweisposition
- 48: Auflaufschräge
- 49: Stirnfläche
- 50: Abweiskraft
- 52: Scheitelpunkt
- 54: Befestigungsmittel
- 56: Spalt

## Patentansprüche

1. Anschlagvorrichtung (1) mit einem Sockelteil (2), der an einem Gegenstand (14) wie einer Ladefläche anbringbar ausgestaltet ist, mit einem relativ zum Sockelteil (2) um eine Schwenkachse (4) schwenkbar am Sockelteil (2) angebrachten Bügelteil (6) zum Anschlagen eines Anschlag-, Zurr-, Spann- oder Hebemittels (28) und mit einem Stellmechanismus (40), der wenigstens eine Bügelabweisnocke (46, 46a, 46b) und wenigstens einen mit der Schwenkbewegung (8) zwischen Bügelteil (6) und Sockelteil (2) die Bügelabweisnocke (46, 46a, 46b) an einer Abweisposition (47, 47a, 47b) zumindest abschnittsweise überstreichenden Bremstaster (42) aufweist und der eine mit abnehmendem Abstand von der wenigstens einen Abweisposition (47, 47a, 47b) zunehmende, der Schwenkbewegung entgegengerichtete Abweiskraft erzeugt, wobei die Bügelabweisnocke (46, 46a, 46b) an einem separaten, am Sockelteil (2) oder Bügelteil (6) angebrachten Nockenträger (44) angeordnet ist, **dadurch gekennzeichnet, dass** sich der Nockenträger (44) an der in Richtung der Schwenkachse (4) vom Sockelteil (2) weg weisenden Seite des Bügelteils (6) befindet.

2. Anschlagvorrichtung (1) nach Anspruch 1, wobei der Nockenträger (44) wiederholt lösbar und/oder wiederholt austauschbar am Sockelteil (2) oder Bügelteil (6) angeordnet ist.

3. Anschlagvorrichtung (1) nach Anspruch 1 oder 2, wobei der Nockenträger (44) am Sockelteil (2) befestigt ist.

4. Anschlagvorrichtung (1) nach einem der Ansprüche 1 bis 3, wobei der Nockenträger (44) ringförmig ist.

5. Anschlagvorrichtung (1) nach einem der Ansprüche 1 bis 4, wobei der Nockenträger (44) sich wenigstens abschnittsweise um die Schwenkachse (4) herum erstreckt.

6. Anschlagvorrichtung (1) nach einem der Ansprüche 1 bis 5, wobei der Nockenträger (44) und der Bremstaster (42) wenigstens in einem Bereich um eine Abweisposition (47, 47a, 47b) federnd gegeneinander gedrückt sind.

7. Anschlagvorrichtung (1) nach einem der Ansprüche 1 bis 6, wobei der Bremstaster (42) federnd ist.

8. Anschlagvorrichtung (1) nach einem der Ansprüche 1 bis 7, wobei die Bügelabweisnocke (46) von wenigstens einer Auflaufschräge (48) begrenzt ist.

9. Anschlagvorrichtung (1) nach einem der Ansprüche 1 bis 8, wobei der Nockenträger (44) auf einem den Bügelteil (6) tragenden Achsstummel (38) des Sockelteils (2) sitzt.

10. Anschlagvorrichtung (1) nach einem der Ansprüche 1 bis 9, wobei der Nockenträger (44) ein Lager (39) zwischen Sockelteil (2) und Bügelteil (6) abdeckt.

11. Anschlagvorrichtung (1) nach einem der Ansprüche 1 bis 10, wobei der Sockelteil (2) mit dem daran angebrachten Bügelteil (6) um eine senkrecht zur Schwenkachse (4) verlaufende Drehachse (20) drehbar an einem Haltebolzen (16) befestigt ist.

12. Anschlagvorrichtung (1) nach einem der Ansprüche 1 bis 11, wobei sich wenigstens eine Abweisposition (47, 47a, 47b) beabstandet von den Enden (12) eines Schwenkbereichs (10) der Schwenkbewegung (8) des Bügelteils (6) gegenüber dem Sockelteil (2) befindet.

13. Anschlagvorrichtung (1) nach einem der Ansprüche 1 bis 12, wobei sich jeweils eine Abweisposition (47, 47a, 47b) an einem Ende (12) des Schwenkbereichs (10) der Schwenkbewegung (8) befindet.

## Claims

1. Slinging device (1), comprising a base part (2) configured to be attachable to an object (14), such as a loading platform, a hoop part (6) mounted on the base part (2) so as to be pivotable relative to the base part (2) about a pivot axis (4) for attaching a slinging, lashing, tensioning or lifting means (28), and an adjusting mechanism (40) comprising at least one hoop deflection cam (46, 46a, 46b) and at least one brake plunger (42) which, during the pivoting movement (8) between the hoop part (6) and the base part (2), at least partially sweeps over the hoop deflection cam (46, 46a, 46b) at a deflection position (47, 47a, 47b), and which generates a deflection force opposing the pivoting movement and increasing as the distance from the at least one deflection position (47, 47a, 47b) decreases, wherein the hoop deflection cam (46, 46a, 46b) is arranged on a separate cam carrier (44) mounted on the base part (2) or the hoop part (6), **characterized in that** the cam carrier (44) is located on the side of the hoop part (6) facing away from the base part (2) in the direction of the pivot axis (4).

2. Slinging device (1) according to claim 1, wherein the cam carrier (44) is arranged on the base part (2) or the hoop part (6) so as to be repeatedly detachable and/or repeatedly replaceable.

3. Slinging device (1) according to claim 1 or 2, wherein the cam carrier (44) is fastened to the base part (2).

4. Slinging device (1) according to any one of claims 1 to 3, wherein the cam carrier (44) is annular.

5. Slinging device (1) according to any one of claims 1 to 4, wherein the cam carrier (44) extends, at least in sections, around the pivot axis (4).

6. Slinging device (1) according to any one of claims 1 to 5, wherein the cam carrier (44) and the brake plunger (42) are resiliently urged against one another at least in a region around a deflection position (47, 47a, 47b).

7. Slinging device (1) according to any one of claims 1 to 6, wherein the brake plunger (42) is resilient.

8. Slinging device (1) according to any one of claims 1 to 7, wherein the hoop deflection cam (46) is bounded by at least one ramp surface (48).

9. Slinging device (1) according to any one of claims 1 to 8, wherein the cam carrier (44) is seated on a stub shaft (38) of the base part (2), the stub shaft (38) supporting the hoop part (6).

10. Slinging device (1) according to any one of claims 1 to 9, wherein the cam carrier (44) covers a bearing (39) between the base part (2) and the hoop part (6).

11. Slinging device (1) according to any one of claims 1 to 10, wherein the base part (2), together with the hoop part (6) mounted thereon, is rotatably mounted on a retaining pin (16) about a rotation axis (20) extending perpendicularly to the pivot axis (4).

12. Slinging device (1) according to any one of claims 1 to 11, wherein at least one deflection position (47, 47a, 47b) is spaced apart from the ends (12) of a pivoting range (10) of the pivoting movement (8) of the hoop part (6) relative to the base part (2).

13. Slinging device (1) according to any one of claims 1 to 12, wherein a respective deflection position (47, 47a, 47b) is provided at each end (12) of the pivoting range (10) of the pivoting movement (8).

## Revendications

1. Dispositif d'amarrage (1) avec une partie de socle (2) configurée pour être montée sur un objet (14) tel qu'une plateforme de chargement, avec une partie de manille (6) fixée à la partie de socle (2) qui est pivotante autour d'un axe de pivotement (4) par rapport à la partie de socle (2) pour amarrer un moyen d'amarrage, d'arrimage, de tension ou de levage (28) et avec un mécanisme de réglage (40), qui comporte au moins une came de repoussement de manille (46, 46a, 46b) et au moins un palpeur de freinage (42) qui, avec le mouvement de pivotement (8) entre la partie de manille (6) et la partie de socle (2), balaie au moins par sections la came de repoussement de manille (46, 46a, 46b) dans une position de repoussement (47, 47a, 47b), et générant une force de repoussement dirigée contre le mouvement de pivotement qui augmente avec la diminution de la distance jusqu'à ladite au moins une position de repoussement (47, 47a, 47b), dans lequel la came de repoussement de manille (46, 46a, 46b) est agencée sur un porte-came (44) séparé, monté sur la partie de socle (2) ou sur la partie de manille (6), **caractérisé en ce que** le porte-came (44) est situé du côté de la partie de manille (6) pointant à l'opposé de la partie de socle (2) dans la direction de l'axe de pivotement (4).

2. Dispositif d'amarrage (1) selon la revendication 1, dans lequel le porte-came (44) est agencé sur la partie de socle (2) ou la partie de manille (6) de manière à pouvoir être retiré et/ou remplacé de façon répétée.

3. Dispositif d'amarrage (1) selon la revendication 1 ou 2, dans lequel le porte-came (44) est fixé à la partie de socle (2).

4. Dispositif d'amarrage (1) selon l'une des revendications 1 à 3, dans lequel le porte-came (44) est annulaire.

5. Dispositif d'amarrage (1) selon l'une des revendications 1 à 4, dans lequel le porte-came (44) s'étend au moins par sections autour de l'axe de pivotement (4).

6. Dispositif d'amarrage (1) selon l'une des revendications 1 à 5, dans lequel le porte-came (44) et le palpeur de freinage (42) sont pressés l'un contre l'autre de manière élastique au moins dans une zone autour d'une position de repoussement (47, 47a, 47b).

7. Dispositif d'amarrage (1) selon l'une des revendications 1 à 6, dans lequel le palpeur de freinage (42) est à ressort.

8. Dispositif d'amarrage (1) selon l'une des revendications 1 à 7, dans lequel la came de repoussement de manille (46) est délimitée par au moins une rampe (48).

9. Dispositif d'amarrage (1) selon l'une des revendications 1 à 8, dans lequel le porte-came (44) repose sur un bout d'axe (38) de la partie de socle (2) qui supporte la partie de manille (6).

10. Dispositif d'amarrage (1) selon l'une des revendications 1 à 9, dans lequel le porte-came (44) recouvre un palier (39) entre la partie de socle (2) et la partie de manille (6).

11. Dispositif d'amarrage (1) selon l'une des revendications 1 à 10, dans lequel la partie de socle (2) avec la partie de manille (6) qui y est attachée est fixée à un boulon de retenue (16) de manière rotative autour d'un axe de rotation (20) perpendiculaire à l'axe de pivotement (4).

12. Dispositif d'amarrage (1) selon l'une des revendications 1 à 11, dans lequel au moins une position de repoussement (47, 47a, 47b) est éloignée des extrémités (12) d'une plage de pivotement (10) du mouvement de pivotement (8) de la partie de manille (6) par rapport à la partie de socle (2).

13. Dispositif d'amarrage (1) selon l'une des revendications 1 à 12, dans lequel une position de repoussement (47, 47a, 47b) est située à une extrémité (12) de la plage de pivotement (10) du mouvement de pivotement (8) .
